# EUROPÄISCHE PATENTSCHRIFT

(11) **EP 1 594 355 B1**
(45) Veröffentlichungstag und Bekanntmachung des Hinweises auf die Patenterteilung: **16.04.2008**
(21) Anmeldenummer: 04709600.3
(22) Anmeldetag: 10.02.2004
(51) Int. Cl.: A01B 29/06, A01B 49/02, A01B 63/10

(54) **LANDWIRTSCHAFTLICHES ARBEITSGERÄT**
AGRICULTURAL DEVICE
MACHINE AGRICOLE

(30) Priorität: 20.02.2003 DE 10307396; 29.01.2004 DE 102004004334
(43) Veröffentlichungstag der Anmeldung: 16.11.2005
(73) Patentinhaber: Amazonen-Werke H. Dreyer GmbH & Co. KG, 49205 Hasbergen (DE)
(72) Erfinder: TIESSEN, Reimer, 26135 Oldenburg (DE); FELDHAUS, Werner, 27801 Dötlingen/Gevershausen (DE); STEEN, Rüdiger, 27798 Hude (DE)
(74) Vertreter: Grünecker, Kinkeldey, Stockmair & Schwanhäusser Anwaltssozietät
(86) Internationale Anmeldenummer: PCT/EP2004/001232
(87) Internationale Veröffentlichungsnummer: WO 2004/073381

(56) Entgegenhaltungen:
- EP-A- 0 365 049
- DE-A- 2 644 069
- DE-A- 10 141 991
- DE-U- 9 010 178

## Beschreibung

Die Erfindung betrifft ein landwirtschaftliches Bearbeitungsgerät gemäß des Oberbegriffes des Patentanspruches 1.

Ein derartiges Bearbeitungsgerät ist in der nicht vorveröffentlichten deutschen Patentanmeldung P 101 41 991.0 beschrieben. Bei diesem Bodenbearbeitungsgerät sind die das Fahrwerk bildenden Reifenelemente auf Höhe der übrigen die die Walze bildenden Reifenelemente angeordnet, so dass eine möglichst kurze und kompakte Bauweise des Gerätes erreicht wird. Die das Fahrwerk bildenden Reifenelemente weisen einen größeren Durchmesser als die übrigen Reifenelemente der Walze auf. Die einzelnen Abschnitte der Walze sind jeweils höhenunveränderlich gegenüber dem Tragrahmen der Walze angeordnet. Die das Fahrwerk bildenden Reifenelemente der Walze sind mittels Schwingen an dem Rahmen des Gerätes angeordnet und können mittels Hydraulikzylinder gegenüber den übrigen Elementen der Walze abgesenkt bzw. auf Höhe der übrigen Reifenelemente der Walze gebracht werden. Zum Transport des Gerätes werden die das Fahrwerk bildenden Reifenelemente mittels der Hydraulikzylinder gegenüber den übrigen Reifenelementen nach unten gedrückt, so dass das Gerät angehoben wird.

Durch das deutsche Gebrauchsmuster 90 010 178 ist gemäß des die Seiten 11 und 12 überbrückenden Absatzes eine aus einzelnen und zueinander beweglichen Reifenelementen bestehende Walze bekannt, der ein hydraulisches bzw. hydropneumatisches Ausgleichssystem zugeordnet ist. Durch diese Ausgleichsanordnung der hydraulischen bzw. hydropneumatischen Federaggregate kann auch auf unebenen Böden eine besonders ruhige Fahrt der Bodenwalze und der davon getragenen Geräteteile erreicht werden.

Bei einer derartigen Bodenwalze können einzelne Reifenelemente aufgrund des Ausgleichssystems nicht ohne weiteres als Transportfahrwerk genutzt werden.

Der Erfindung liegt die Aufgabe zugrunde, bei Bodenbearbeitungsgeräten mit Walzen, die Ausgleichssysteme aufweisen, einzelne in dem Ausgleichssystem angeordnete Walzenelemente auch für den Transport nutzbar zu machen.

Diese Aufgabe wird erfindungsgemäß durch die kennzeichnenden Merkmale des Anspruches 1 gelöst. Infolge dieser Maßnahmen können durch eine zusätzliche Druckbeaufschlagung einzelner Reifenelemente der Walze diese Reifenelemente über das Druckausgleichssystem gegenüber den übrigen Reifenelementen abgesenkt und somit die gesamte Maschine zum Transport angehoben werden. Das hydraulische Ausgleichssystem wird dazu genutzt, um im Mittelbereich der Maschine die jeweiligen zur Straßenfahrt genutzten Reifenelemente der Walze stärker zu belasten, somit trägt sich die Maschine nur auf diesen Reifenelementen. Hierdurch wird der übrige Mittelbereich und der Außenbereich der Walze während der Straßenfahrt entlastet bzw. ganz ausgehoben.

Insbesondere bei längeren Transportfahrten ist es vorteilhaft, dass die für den Transport vorgesehenen Reifenelemente mit Druckluft beaufschlagbar sind. Hierzu ist es möglich, eine Reifendruckregelanlage vorzusehen mittels welcher die Reifenelemente für die Transportfahrt mit einem vorteilhaften Luftdruck beaufschlagt werden können, während für die Bearbeitung auf dem Felde der Luftdruck abgesenkt wird.

Um die einzelnen Reifenelemente, die für die Transportfahrt vorgesehen sind, mit einem höheren Druck in dem Ausgleichssystem gegenüber den übrigen Reifenelementen beaufschlagen zu können, sind in den Hydraulikleitungen des Ausgleichssystems Absperrventile angeordnet.

Für manche Einsatzfälle kann es sinnvoll sein zumindest das Fahrwerk bildende Reifenelementen Abstreifer zuzuordnen. Diese Abstreifer streifen das an der Lauffläche oder zwischen den Reifenelemente anhaftende Bodenteile von diesen ab.

Weitere Einzelheiten der Erfindung sind den übrigen Ansprüchen, der Beispielsbeschreibung und den Zeichnungen zu entnehmen.

Hierbei zeigen
- Fig. 1: den Hydraulikschaltplan für die Bodenwalze in Prinzipdarstellung,
- Fig. 2: die Bodenwalze in der Ansicht von vorn, in Prinzipdarstellung und ausschnittsweise,
- Fig. 3: die Bodenwalze in der Ansicht III/III im vergrößerten Maßstab,
- Fig. 4: die Bodenwalze in der Draufsicht, im Ausschnitt und in Prinzipdarstellung,
- Fig. 5: den Hydraulikschaltplan für eine andere Bodenwalze gemäß den Fig. 6 bis 11 mit Säschar in Prinzipdarstellung,
- Fig. 6: die Bodenwalze mit zugeordneten Säscharen in Seitenansicht und Prinzipdarstellung,
- Fig. 7: die Bodenwalze nach Fig. 6 in der Ansicht von vom in Arbeitsstellung,
- Fig. 8: die Bodenwalze mit Säscharen nach Fig. 6 in Arbeitsstellung und in der Draufsicht sowie in Prinzipdarstellung,
- Fig. 9: die Bodenwalze gemäß Fig. 6 in Transportstellung in Seitenansicht,
- Fig. 10: die Bodenwalze gemäß Fig. 9 in Transportstellung und in der Ansicht von vorne und
- Fig. 11: die Bodenwalze gemäß Fig. 9 in der Draufsicht und in Transportdarstellung.

Die Bodenwalze 1 kann als separates Bodenbearbeitungsgerät eingesetzt werden. Des weiteren ist auch vorgesehen, dass die Bodenwalze 1 als Nachlauf- und Tiefenführungselement eines vorlaufenden Bodenbearbeitungsgerätes, Bestandteil einer Geräte- oder Bestellkombination oder vorlaufendes Verdichtungselement für Säschare ist.

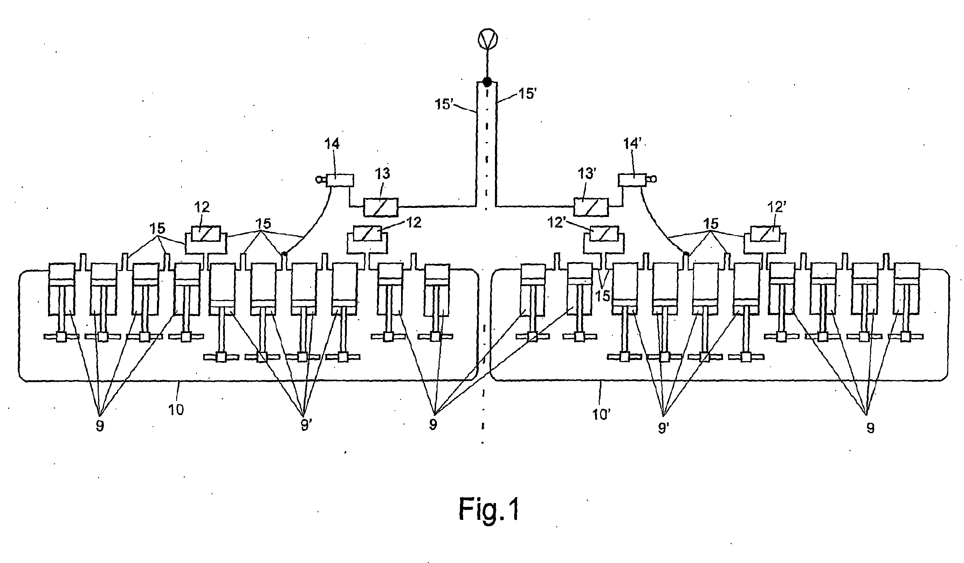

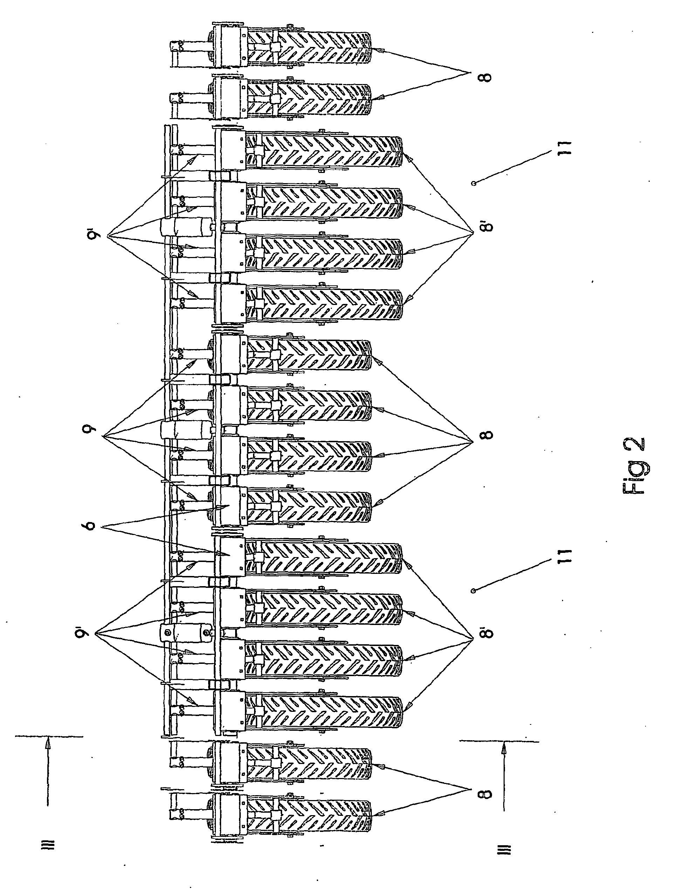

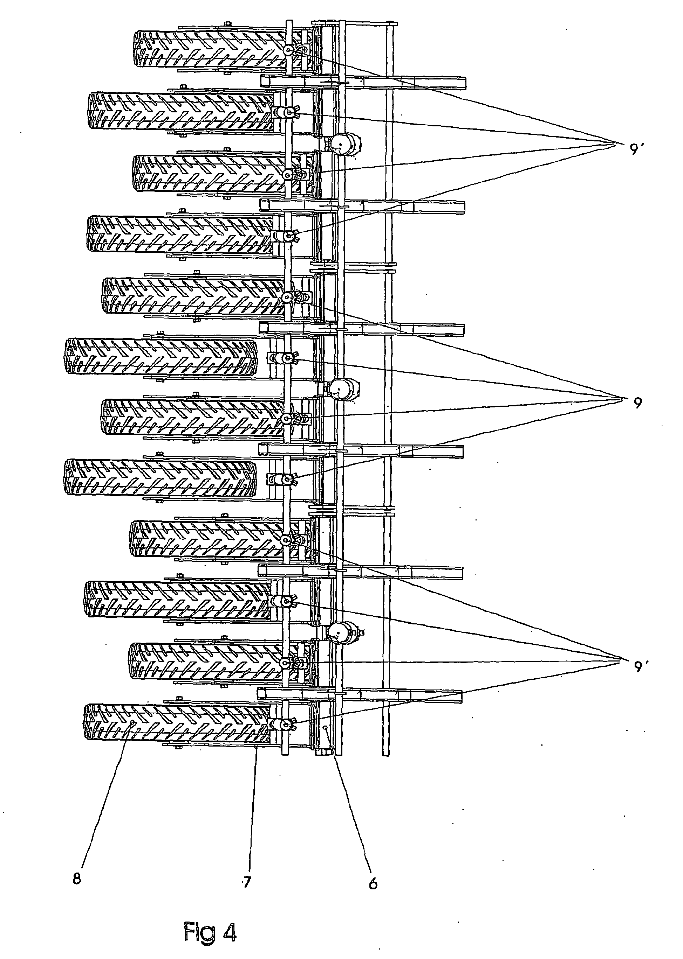

Die Bodenwalze 1 weist den Rahmen 2 auf, der den quer zur Fahrtrichtung 3 laufenden Querbalken 4 aufweist. An dem Querbalken 4 sind über Gummifederelemente 5 aufweisende Gelenkelemente 6 die sich nach schräg hinten unten erstreckenden Tragarme 7 federnd schwenkbar angeordnet sind, an denen die Rollen 8 oder reifenartigen Elemente der Walze 1 angeordnet sind. Diese Elemente 7 sind in Fahrtrichtung 3 versetzt zueinander angeordnet, wie die Fig. 4 zeigt. Zwischen dem Rahmen 2 und den Tragarmen 5 ist jeweils ein Hydraulikzylinder 9 angeordnet. Die Hydraulikzylinder 9 sind als Druckausgleichssystem zwischen den einzelnen reifen- und walzenartigen Elementen 8 ausgebildet. Das Druckausgleichssystem weist zwei Druckausgleichskreise 10 und 11 auf, wie die Fig. 1 zeigt. Die Reifenelemente 8 der Bodenwalze 1 rollen während der Bodenbearbeitung auf dem Boden ab. Zum Transport des Bodenbearbeitungsgerätes können einige der Reifenelemente 8' gegenüber den übrigen Reifenelementen 8 nach unten gedrückt werden und somit als Fahrwerk 11 dienen. Somit können einige Reifenelemente 8' als Fahrwerk 11 zum Transport des Gerätes auf der Straße nutzbar gemacht werden und gegenüber den übrigen Reifenelementen 8 eine die übrigen Reifenelementen 8 nach unten überragende Position gebracht werden, wie die Fig. 1 und 2 zeigen.

Hierzu sind in jedem Druckausgleichskreis 10 und 10' des Druckausgleichssystems Sperrventile 12,12', 13, 13' und jeweils ein Ausgleichszylinder 14, 14' angeordnet, wie Fig. 1 zeigt. Die Hydraulikzylinder 9, 9' jedes Druckausgleichkreises sind über die Leitungen 15 miteinander verbunden. In diesen Leitungen 15 sind die Absperrventile 12, 12', 13, 13' und die Ausgleichszylinder 14, 14' angeordnet, wie Fig. 1 zeigt. Die den als Fahrwerk 11 dienenden Reifenelementen 8' zugeordneten Hydraulikzylinder 9' sind gegenüber den übrigen Hydraulikzylindern 9 mittels der Absperrventile 12, 12' absperrbar. Des weiteren ist jedem Hydraulikdruckausgleichssystem 10, 10' ein Ausgleichszylinder 14, 14' zugeordnet, um so über das geschlossene Druckausgleichssystem 10, 10' eine zusätzliche Ölmenge in die den als Fahrwerk 11 dienenden Reifenelementen 8' zugeordneten Hydraulikzylindern 9' zu drücken, damit die als Fahrwerk 11 dienenden Reifenelemente 8' nach unten gedrückt werden und so die Maschine vom Boden abgehoben werden kann. Die Ausgleichszylinder 14,14' sind über die Leitungen 15' an eine Hydraulikanlage, beispielsweise die das Bodenbearbeitungsgerät ziehenden Ackerschleppers angeschlossen. Des weiteren ist in den von den Ausgleichzylinder 14, 14' zu der Hydraulikanlage, die beispielsweise die des Schleppers oder eine separate Hydraulikanlage sein kann, führende Leitungen 15', jeweils ein weiteres Sperrventil 13, 13' angeordnet, wie Fig. 1 zeigt, um sicher zu stellen, das während des Transportes kein Öl aus die als Fahrwerk 11 dienenden Reifenelementen 8' zugeordneten Hydraulikzylindern 9' entweichen kann.

Aufgrund dieser Ausgestaltung des Druckausgleichsystems 10, 10' können für den Transport die für den Transport das Fahrwerk 11 bildenden Reifenelementen 8' zugeordneten Hydraulikzylindern 9' mit einem höheren Druck in dem Ausgleichssystem 10, 10' als die übrigen Reifenelemente 8 in dem Ausgleichsystem zugeordneten Hydraulikzylindern 9 beaufschlagt werden.

Wenn die einzelnen die das Fahrwerk 11 bildenden Reifenelemente 8' als Hohlreifen ausgebildet sind, ist es möglich diese Reifenelemente 8' für den Transport mit Druckluft zu beaufschlagen. Hierbei sind die für den Transport vorgesehenen Reifenelemente 8' mit einem höheren oder gleichen Luftdruck, als die übrigen Reifenelemente 8 beaufschlagbar.

In einfacher Weise lässt sich diese Druckluftbeaufschlagung verwirklichen, indem zumindest den Reifenelementen 8' ein nicht dargestelltes Luftdruckregelsystem zugeordnet ist.

Die das Fahrwerk 11 bildenden Reifenelemente 8' sind zumindest teilweise mit einer nicht dargestellten Bremsanlage ausgestattet.

Die Funktionsweise des Druckausgleichssystems 10, 10' mit Transporteinrichtung oder Fahrwerk 11 ist folgende:

Die in den Druckausgleichssystemen 10, 10' angeordneten Absperrventile 12, 12', 13, 13' befinden sich in Öffnungsstellung, so dass das Öl von den einzelnen Zylindern 9 durch die Absperrventile strömen kann. Somit können die einzelnen Zylinder 9 des linken Druckausgleichssystems 10 sich zueinander bewegen, genauso wie die Zylinder 9' des rechten Druckausgleichssystems 10'. Während der Arbeit auf dem Felde ist die zusätzliche Ölmenge, die zur Schaffung des Fahrwerkes 11 benötigt wird, in dem jeweiligen Fahrwerksausgleichszylinder 14, 14' enthalten.

Wenn nun die Maschine in Transportstellung gebracht werden soll, um auf dem Fahrwerk 11 transportiert zu werden, werden zunächst die Absperrventile 12, 12' in den Druckausgleichssystemen 10, 10' in Sperrstellung gebracht, so dass kein Öl von dem Fahrwerk 11 zugeordneten Reifenelementen 8' zugeordneten Hydraulikzylindern 9' in die übrigen Hydraulikzylinder 9 fließen kann. Die Absperrventile 13, 13', welche zwischen dem Fahrwerksausgleichszylinder 14, 14' und der Hydraulikanlage angeordnet sind, befinden sich in Öffnungs- bzw. Durchflussstellung, so dass über die Hydraulikanlage und das jeweilige Absperrventil 13, 13' Öl in den jeweiligen Ausgleichszylinder 14, 14' gedrückt werden kann. Über den jeweiligen Ausgleichszylinder 14, 14' wird Öl in das geschlossene Hydrauliksystem der Fahrwerkszylinder 9' gedrückt, so dass die Hydraulikzylinder 9' ausfahren und die das Fahrwerk 11 bildenden Reifenelemente 8' nach unten drücken.

Wenn die Reifenelemente 8' ganz nach unten gedrückt sind, werden die Absperrventile 13, 13' geschlossen, so dass kein Öl entweichen kann. Die Maschine lässt sich dann mit dem Fahrwerk 11 auf Straßen und Wegen transportieren.

Wenn die Maschine dann anschließend aus Transport- in Arbeitsstellung gebracht werden soll, werden die Absperrventile 13 und 13' wiederum geöffnet, so dass das Ölvolumen über den jeweiligen Ausgleichszylinder 14, 14' ausgeglichen werden kann, so dass die dem Fahrwerk 11 zugeordneten Hydraulikzylinder 9' einfahren und das Öl aus dem Ausgleichszylinder 14, 14' in die Hydraulikanlage zurückströmt. Weiterhin werden dann noch die Absperrventile 12, 12' geöffnet, so dass das Druckausgleichssysteme 10 und 10' für die Arbeit wieder in Funktion ist.

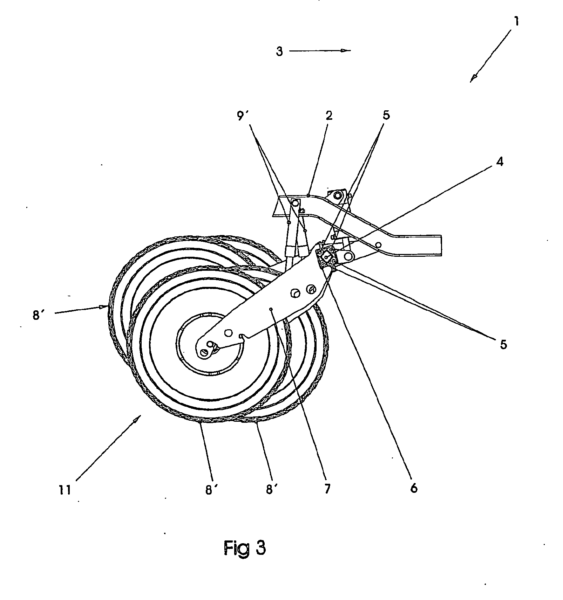

Mittels dieser vorbeschriebenen Ausbildung des Hydraulikdruckausgleichssystems 10, 10' lässt sich eine Integration des Fahrwerkes 11 für Straßenfahrten in die Walze 1 erreichen. Das hydraulische Ausgleichssystem 10, 10' wird genutzt, um den Mittelbereich der Maschine und den jeweiligen zur Straßenfahrt genutzten Bereich 8' der Walze 1 stärker zu belasten, somit trägt sich die Maschine auf diesen Rollen 8'. Es wird somit ein simuliertes Fahrwerk 11 erreicht, der Mittelbereich zwischen diesen Rollen 8' wird während der Straßenfahrt entlastet bzw. gegenüber den das Fahrwerk 11 bildenden Reifenelementen 8' angehoben. Dies bedingt, dass Maschinen für große Arbeitsbreiten von der Klapptechnik her eine Dreiteiligkeit besitzen, und zwar für den Mittelbereich in dem auch die Fahrwerksrollen 8' untergebracht sind und ein linkes und rechtes Klappteil, das während der Straßenfahrt hochgeklappt werden kann, was jedoch nicht in den Zeichnungen dargestellt ist. Es besteht auch die Möglichkeit, dass die Rollen 8', auf der die Maschine während der Straßenfahrt sich abstützt, einen gewissen Versatz zueinander haben, wie die Fig. 3 und 4 zeigen.

Diese Rollen 8' können luftbereift sein, oder nur während der Straßenfahrt beispielsweise über ein nicht dargestelltes Druckregelsystem mit Luft gefüllt werden. Wie bereits vor ausgeführt, können alle oder einige Rollenelemente des Fahrwerks 11 mit einer nicht dargestellten Bremseinrichtung ausgestattet sein. Die Walzenelemente sind so ausgebildet, dass die übrigen Walzenelemente 8 und das Fahrwerk 11 bildenden Reifenelemente 8' im Walzenbereich während der Arbeit ein nahezu ähnliches Arbeitsergebnis auf dem Acker erzeugen. Das Fahrwerk 11 soll nicht nur zum Straßentransport, sondern auch zum Manövrieren am Vorgewende auf dem Felde zur Verfügung stehen.

Das Fahrwerk 11 kann unterschiedlich ausgeführt sein, es könnten, wie im Ausführungsbeispiel gezeigt jeweils vier Rollen 8' vorgesehen sein oder auch nur zwei Rollen 8'. Es ist auch möglich durch eine entsprechende Anordnung von Absperrventilen 12, 12' für die Straßenfahrt jeweils nur zwei Rollen 8' zu nutzen.

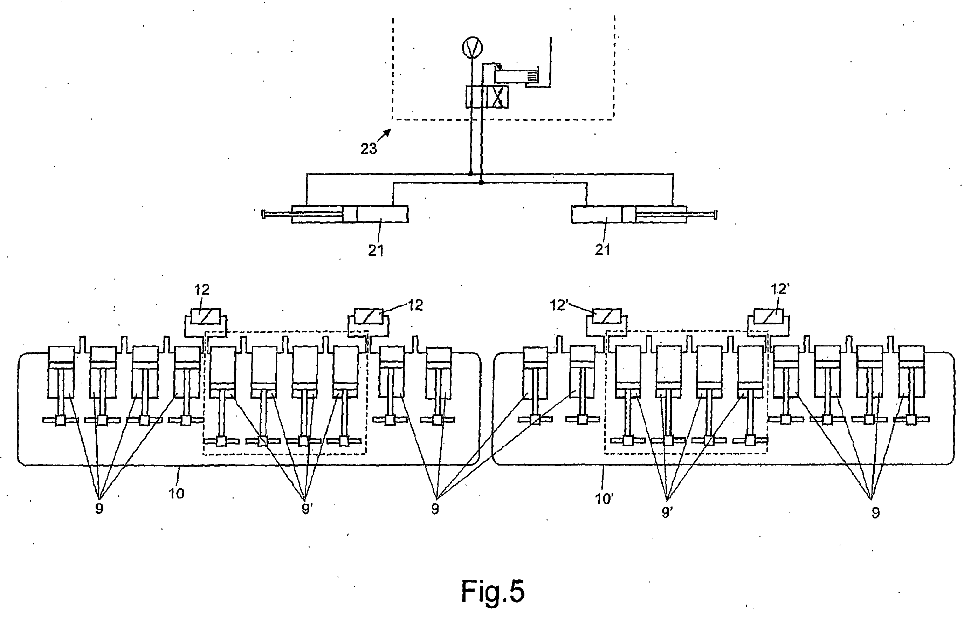

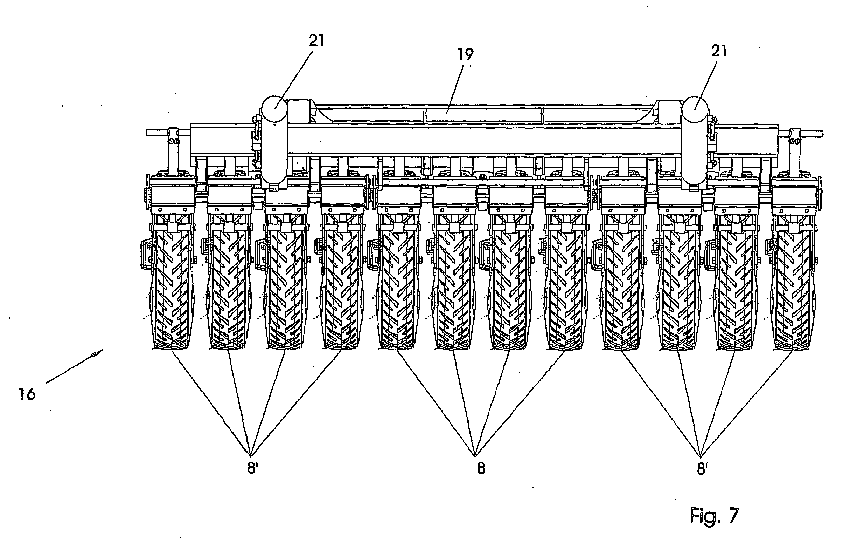

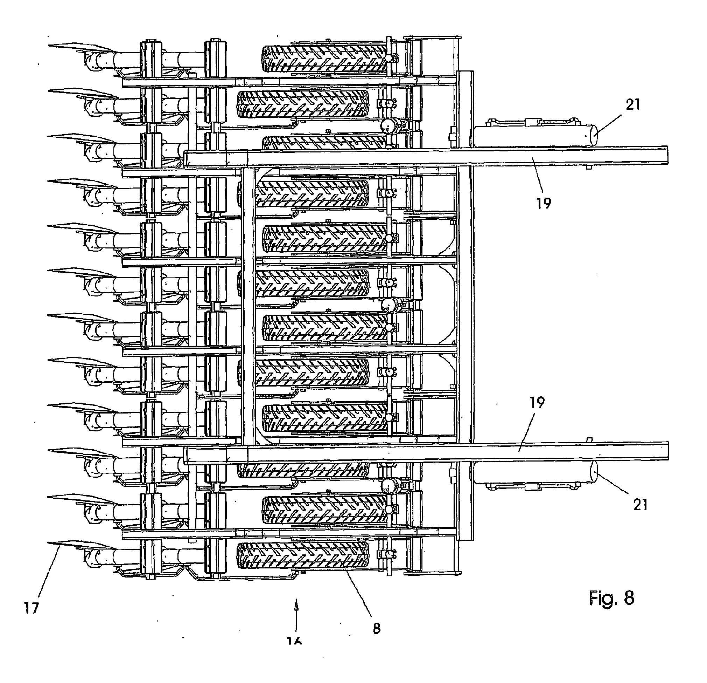

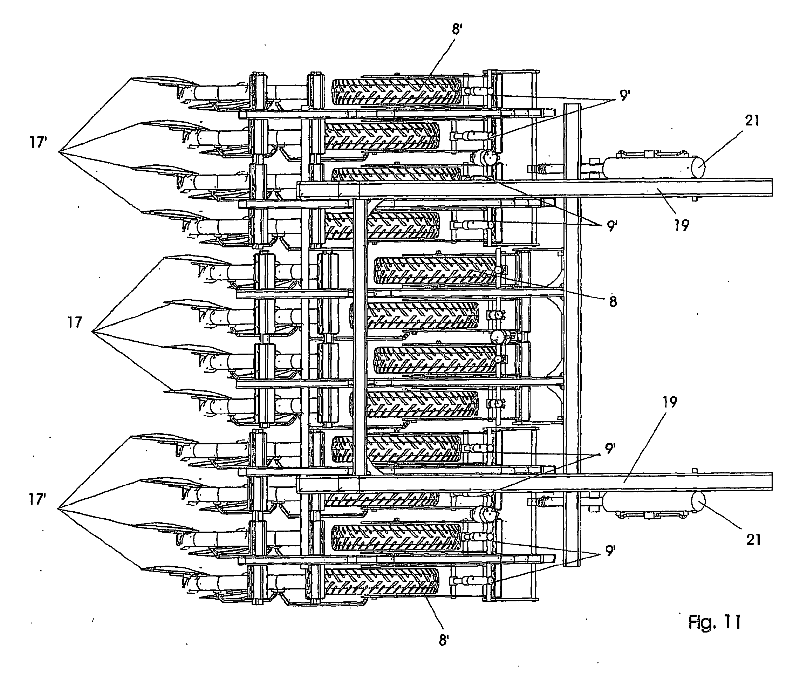

Die Bodenwalze 16 gemäß den Fig. 5 bis 11 unterscheidet sich von der Bodenwalze 1 gemäß den Fig. 1 bis 4 im wesentlichen dadurch, dass hinter der Bodenwalze 16 Säschare angeordnet sind und die Rahmen 18 an einem zentralen Tragrahmen 19 befestigt sind. Hierbei sind die Rahmen 18', welche die Reifenelemente 8', die das Fahrwerk 11 bilden, mittels einer Gelenkanordnung 20 am Tragrahmen 19 befestigt sind und mittels Hydraulikzylinder 21 um die Gelenkachse 22 dieser Gelenkanordnung 20 verschwenkbar sind, während die übrigen Rahmen 18 an dem Tragrahmen 19 starr angeordnet sind.

Die Hydraulikzylinder 9 und 9' sind als Druckausgleichssystem 10,10' zwischen den einzelnen reifenartigen Elementen 8 ausgebildet. Die Hydraulikzylinder 9 und 9' sind jeweils zwischen dem Rahmen 18 und den Tragarmen 7 angeordnet. Das Druckausgleichssystem weist, wie Fig. 5 zeigt, die beiden Druckausgleichskreise 10 und 10' auf. In diesen Druckausgleichskreisen 10 und 10' des Druckausgleichssystems sind die Sperrventile 12 und 12' angeordnet. Die dem Fahrwerk 11 zugeordneten Hydraulikzylinder 9' sind mittels der Sperrventile 12, 12' gegenüber den anderen Hydraulikzylinder 9 der Druckausgleichssysteme 10 und 10' absperrbar.

Zwischen den Rahmen 18 und dem Tragrahmen 19 sind für die das Fahrwerk 11 bildende Reifenelemente jeweils zumindest ein doppeltwirkender Hydraulikzylinder 21 angeordnet, die über Leitungen mit einem Hydrauliksystem 23, wie Fig. 5 zeigt, verbunden sein.

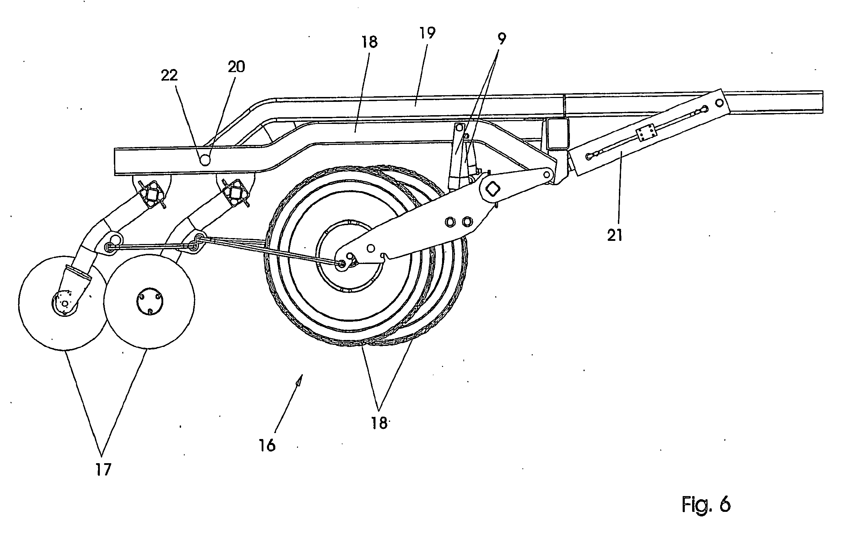

In Arbeitsposition der Walze 16 und der Säschare 17 sind die Hydraulikzylinder 21 eingefahren und die Absperrventile 12, 12' geöffnet, so dass die Reifenelemente 8,8' und die Säschare 17 sich in den Positionen befinden, wie es die Fig. 6 bis 8 zeigen.

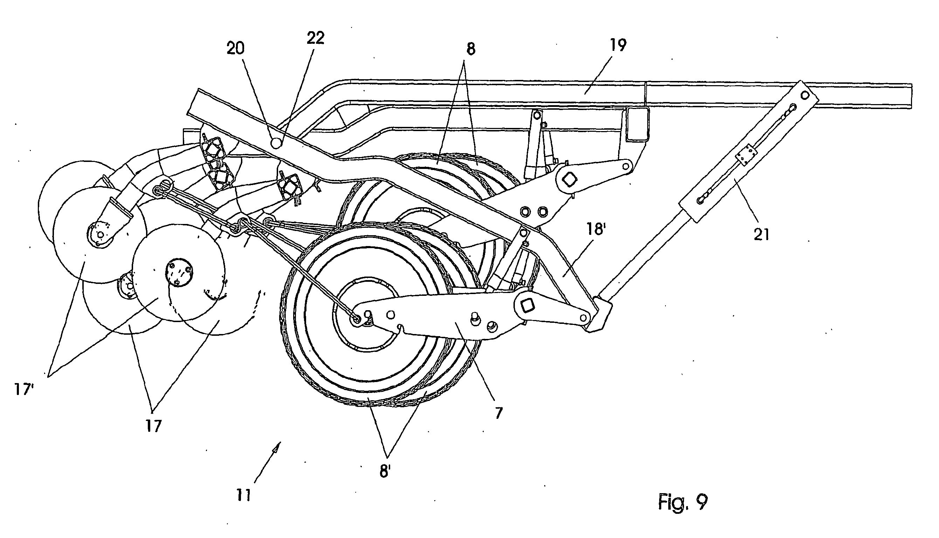

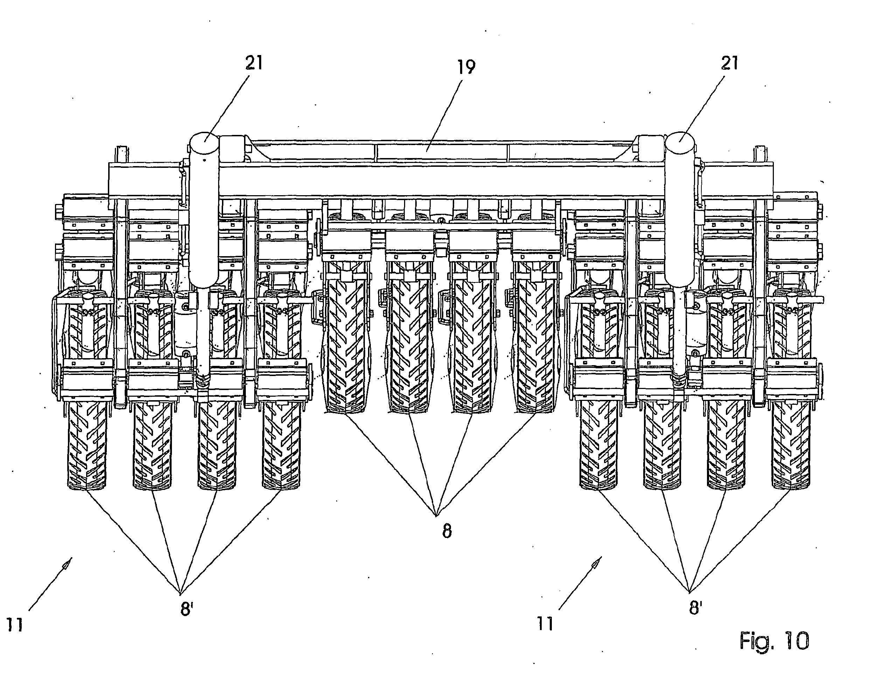

Um die Säschare 17 und die Reifenelemente 8' in Transportposition zu bringen, werden zunächst die Absperrventile 12,12' geschlossen, so dass die als Fahrwerk 11 dienenden Reifenelementen 8' zugeordnete Hydraulikzylinder 9' gegenüber den übrigen Reifenelementen 8 zugeordneten Hydraulikzylindern 9 abgesperrt sind. Anschließend wird über die Hydraulikanlage 23 den Hydraulikzylindern 21, die zwischen dem Tragrahmen 19 und dem Rahmen 18 angeordnet sind, mit Druck beaufschlagt, so dass sie ausgefahren werden. Hierdurch verschwenken die Hydraulikzylinder 21 die Rahmen 18 in die den Fig. 9 bis 11 gezeigten Positionen, so dass die das Fahrwerk 11 bildenden Reifenelemente 8' gegenüber den übrigen Reifenelementen 8 nach unten gedrückt werden. Hierdurch werden die nicht das Fahrwerk 11 bildenden Reifenelemente 8 und der Rahmen 18 sowie der Tragrahmen 19 angehoben. Gleichzeitig werden auch die den das Fahrwerk 11 bildenden Reifenelemente 9' zugeordneten Säscharen 17 durch Verschwenken des Rahmens 18 nach oben geschwenkt, wie insbesondere die Fig. 9 und 10 zeigen.

Um die Walze aus den in Fig. 9 bis 11 dargestellten Transportposition in die in Fig. 6 bis 8 dargestellte Position zu bringen, werden die Hydraulikzylinder 21 entgegengesetzt durch Umschalten des Umschaltventils der Hydraulikanlage 23 mit Druck beaufschlagt, so dass die Hydraulikzylinder 21 einfahren. Hierdurch wird der Rahmen 18' in die in Fig. 6 bis 8 dargestellte Position verschwenkt. Anschließend werden die Absperrventile 12,12' in dem Druckausgleichssystem 10,10' geöffnet, so dass insgesamt alle Hydraulikzylinder 8,8' wieder in das Druckausgleichssystem 10, 10' integriert sind.

In nicht dargestellter Weise können auf der Rückseite der das Fahrwerk 11 bildenden Reifenelementen 8' Abstreifer angeordnet sein. Diese Abstreifer streifen die an der Lauffläche der Reifenelemente 8' oder zwischen diesen anhaftenden Bodenteile ab.

## Patentansprüche

1. Landwirtschaftliches Bodenbearbeitungsgerät mit zumindest einer auf dem Boden abrollenden Reifenelemente aufweisende Bodenwalze, wobei einige der Reifenelemente als Fahrwerk zum Transport des Gerätes auf der Straße nutzbar und gegenüber den übrigen Reifenelementen in eine die übrigen Reifenelemente nach unten überragende Position bringbar sind,
**dadurch gekennzeichnet, dass**
ein Druckausgleichsystem (10,10') vorgesehen ist, das so ausgebildet ist, dass für den Transport die für den Transport das Fahrwerk (11) bildenden Reifenelemente (8') mit einem höheren Druck in dem Ausgleichsystem (10,10') als die übrigen Reifenelemente in dem Ausgleichsystem (10,10') beaufschlagt werden.

2. Landwirtschaftliches Bodenbearbeitungsgerät nach Anspruch 1,
**dadurch gekennzeichnet, dass**
die Bodenwalze aus mehreren nebeneinander angeordneten Reifenelementen besteht, die jeweils an einzelnen Schwenkarmen zueinander höhenbeweglich an einem quer verlaufenden Tragbalken angeordnet sind und, dass den einzelnen Schwenkarmen das Druckausgleichssystem zugeordnet ist.

3. Bodenbearbeitungsgerät nach Anspruch 1 oder 2, **dadurch gekennzeichnet, dass** die für den Transport vorgesehenen Reifenelemente (8') mit Druckluft beaufschlagbar sind.

4. Bodenbearbeitungsgerät nach Anspruch 3, **dadurch gekennzeichnet, dass** die für den Transport vorgesehenen Reifenelemente (8') mit einem höheren Luftdruck als die übrigen Reifenelemente beaufschlagbar sind.

5. Bodenbearbeitungsgerät nach einem oder mehreren der vorstehenden Ansprüche, **dadurch gekennzeichnet, dass** den Reifenelementen (8') ein Druckregelsystem zugeordnet ist.

6. Bodenbearbeitungsgerät nach einem oder mehreren der vorstehenden Ansprüche, **dadurch gekennzeichnet, dass** zumindest den das Fahrwerk (1!) bildenden Reifenelementen (8') auf deren Rückseite wirksame Abstreifer zugeordnet sind.

## Claims

1. Agricultural ground-cultivating implement, having at least one ground roller which includes tyre elements which travel along the ground, some of the tyre elements being usable as the chassis for transporting the implement on the road and being able to be brought into a position relative to the other tyre elements, which position protrudes downwardly beyond the other tyre elements, **characterised in that** a pressure-equalising system (10, 10') is provided, which is configured so that, for the transportation, the tyre elements (8') forming the chassis (11) for the transportation are subject to a higher pressure in the equalising system (10, 10') than the other tyre elements in the equalising system (10,10').

2. Agricultural ground-cultivating implement according to claim 1, **characterised in that** the ground roller comprises a plurality of tyre elements which are disposed adjacent one another and are respectively disposed on individual pivotal arms in a vertically displaceable manner relative to one another on a transversely extending supporting beam, and **in that** the pressure-equalising system is associated with the individual pivotal arms.

3. Ground-cultivating implement according to claim 1 or 2, **characterised in that** the tyre elements (8'), provided for the transportation, can be subject to compressed air.

4. Ground-cultivating implement according to claim 3, **characterised in that** the tyre elements (8'), provided for the transportation, can be subject to a higher air pressure than the other tyre elements.

5. Ground-cultivating implement according to one or more of the preceding claims, **characterised in that** a pressure-regulating system is associated with the tyre elements (8').

6. Ground-cultivating implement according to one or more of the preceding claims, **characterised in that** at least the tyre elements (8') which form the chassis (11) have operative scrapers associated therewith on the rear side of said elements.

## Revendications

1. Machine agricole pour le travail du sol comportant au moins un rouleau compacteur avec des éléments pneumatiques roulant sur le sol, certains des éléments pneumatiques pouvant servir de train de roulement pour transporter la machine sur route en étant abaissés dans une position en saillie par rapport aux autres éléments pneumatiques,
**caractérisée par**
un système de compensation de pression (10, 10') réalisé pour que les éléments pneumatiques (8') constituant le train de roulement servant au transport, soient mis à une pression plus élevée dans le système de compensation (10, 10') que les autres éléments pneumatiques du système de compensation (10, 10').

2. Machine agricole pour le travail du sol selon la revendication 1,
**caractérisée en ce que**
le rouleau compacteur se compose de plusieurs éléments pneumatiques juxtaposés, installés chacun à un bras basculant, distinct, pour être mobiles en hauteur les uns par rapport aux autres, sur une poutre de support transversale et le système de compensation de pression est associé aux différents bras basculants.

3. Machine agricole pour le travail du sol selon la revendication 1 ou 2,
**caractérisée en ce que**
les éléments pneumatiques (8') prévus pour le transport reçoivent de l'air comprimé.

4. Machine agricole pour le travail du sol selon la revendication 3,
**caractérisée en ce que**
les éléments pneumatiques (8') prévus pour le transport reçoivent de l'air sous pression plus élevée que les autres éléments pneumatiques.

5. Machine agricole pour le travail du sol selon l'une ou plusieurs des revendications précédentes,
**caractérisée par**
un système de régulation de pression associé aux éléments pneumatiques (8').

6. Machine agricole pour le travail du sol selon l'une ou plusieurs des revendications précédentes,
**caractérisée en ce que**
des racloirs sont prévus sur le côté arrière au moins des éléments pneumatiques (8') constituant le train de roulement (11).
